# FASCICULE DE BREVET EUROPEEN

(11) **EP 1 474 737 B1**
(45) Date de publication et mention de la délivrance du brevet: **07.03.2007**
(21) Numéro de dépôt: 02787953.5
(22) Date de dépôt: 17.12.2002
(51) Int. Cl.: G06F 3/02

(54) **CLAVIER FLEXIBLE**
FOLIENTASTATUR
FLEXIBLE KEYBOARD

(30) Priorité: 28.12.2001 LU 90871
(43) Date de publication de la demande: 10.11.2004
(73) Titulaire: IEE INTERNATIONAL ELECTRONICS & ENGINEERING S.A., 6468 Echternach (LU)
(72) Inventeur: SERBAN, Bogdan, 3376 Leudelange (LU)
(74) Mandataire: Beissel, Jean
(86) Numéro de dépôt international: PCT/EP2002/014358
(87) Numéro de publication internationale: WO 2003/056416

(56) Documents cités:
- EP-A- 0 989 509

## Description

La présente invention conceme généralement un dispositif d'entrée de données flexible, tel qu'un un clavier flexible.

Afin de faciliter l'entrée de données dans des ordinateurs de poche (PDA), il est possible de brancher un clavier alphanumérique portable sur ledit ordinateur de poche. Ces claviers portables comprennent souvent plusieurs éléments de clavier rigides, qui sont reliés entre elles par des charnières de manière à être repliables. Un tel clavier est p.ex. décrit dans le document WO-A-00/60438.

Afin de réduire d'avantage la taille de rangement d'un clavier, on a développé des claviers en matière textile. Un tel clavier comprend une première et une deuxième couche textile électroconductrice, qui sont placées à une certaine distance à l'aide d'un tissu écarteur. Les couches textiles sont par exemple tissées ou tricotées en utilisant des fils électroconducteurs et des fils isolants. En appliquant une tension électrique entre deux bornes d'une des couches, un gradient électrique se crée entre les deux bornes de la couche textile électroconductrice. Lorsqu'une force est exercée sur l'une des couches textiles, les deux couches entrent en contact et la tension électrique mesurée est représentative de l'endroit de l'interaction de la force. Un détecteur de position textile qui est utilisable comme clavier est par exemple décrit dans le document EP-A-O 989 509. Le détecteur de position textile décrit dans ce document comprend notamment une première structure textile électroconductrice et une deuxième structure textile électroconductrice arrangées à une distance l'une au dessus de l'autre à l'aide d'un écarteur, l'écarteur comprenant des ouvertures délimitant des zones actives dudit détecteur de position.

On réalise de cette manière un clavier simple et bon marché qui présente une flexibilité élevée, permettant par exemple de l'enrouler autour de l'ordinateur de poche. Un désavantage d'un tel clavier se montre à l'utilisation sur une surface recourbée. En effet, lorsque le clavier est recourbé, les deux couches textiles électroconductrices se touchent facilement, sans que l'utilisateur n'exerce une force d'actionnement sur une des couches textiles. Comme chaque contact entre les couches est interprété comme activation d'une "touche", il s'en suit, que l'entrée de données est perturbée par des signaux provenant d'un contact erroné entre les deux couches électroconductrices.

### Objet de l'invention

L'objet de la présente invention est de proposer un dispositif d'entrée de données flexible, qui réduit considérablement le risque d'activations erronés.

### Description générale de l'invention

Cet objectif est atteint par un dispositif d'entrée de données flexible, comprenant une première couche textile et une deuxième couche textile, lesdites première et deuxième couches textile étant arrangées à une distance l'une au dessus de l'autre à l'aide d'un écarteur, ledit écarteur comprenant des ouvertures délimitant des zones actives dudit dispositif d'entrée de données. Conformément à l'invention, lesdites première et deuxième couches textiles sont électroconductrices dans lesdites zones actives et un matériau à résistance variable avec la pression est appliqué, dans les zones actives, sur au moins une des couches textiles. Grâce au matériau à résistance variable avec la pression, la résistance électrique entre les deux couches textiles varie avec la pression appliquée entre les deux couches. Ce dispositif permet donc de définir un seuil de pression à partir duquel une "touche" définie par une des zones actives du dispositif est considérée être actionnée par un utilisateur.

La détermination de la résistance entre les deux couches textiles pour chaque zone active, c'est à dire pour chaque touche, et l'interprétation de cette détermination peut être faite par l'ordinateur de poche lui-même ou par un circuit électrique d'une interface connectée audit dispositif. Le seuil sera fixé de manière à pouvoir distinguer entre un contact accidentel entre les deux couches textiles, causé par une flexion du dispositif, et un contact intentionnel correspondant à l'actionnement d'une des "touches". Pour une pression peu élevée, telle qu'elle surviendra lors d'un contact accidentel entre les deux couches textiles, ce seuil de résistance n'est pas franchi et le contact n'est pas interprété comme actionnement d'une touche par un circuit électronique connecté.

Il est à noter, que le matériau à résistance variable peut aussi bien être un matériau dont la résistance interne varie avec la pression qu'un matériau dont la résistance de surface avec les couches textiles varie avec la pression. De plus la résistance variable peut aussi bien augmenter que diminuer avec la pression.

Le rôle du matériau à résistance variable est de pouvoir distinguer la résistance électrique entre les deux couches textiles lors d'un contact accidentel de celle lors de l'activation d'une touche. Pour ce faire, il suffit en général d'une très mince couche de ce matériau, surtout dans le cas d'un matériau dont la résistance variable est basée sur l'effet de surface décrit plus haut. Dès lors, le flexibilité du dispositif n'est guère affectée par l'application de cette mince couche.

Dans une exécution avantageuse du dispositif, un matériau à résistance variable avec la pression est appliqué, dans les zones actives, sur chacune des couches textiles. Cette exécution permet de réduire davantage l'épaisseur des couches en matériau à résistance variable, tout en assurant une bonne dynamique du dispositif.

Le matériau à résistance variable, de préférence un matériau semiconducteur, peut être facilement appliqué sur les couches textiles par une méthode de sérigraphie ou de pulvérisation (spray) ou par toute autre méthode de déposition. Il est alors possible de l'appliquer sous forme de couche continue ou bien sous forme de points espacés sur ladite couche textile en question. Dans le deuxième cas, l'espacement entre les différents points sera choisi assez petit pour ne pas permettre un contact direct des couches textiles. Une telle configuration avec plusieurs points espacés présente une meilleure flexibilité par rapport à une couche continue. Alternativement et en fonction de la méthode de déposition choisie, le matériau à résistance variable peut être appliqué sous forme de granulés microscopiques. Cette exécution assure une flexibilité maximale du clavier.

Les couches textiles présentent au moins dans les zones actives une conductivité électrique. Cette conductivité électrique peut par exemple être réalisée par l'intégration de fibres conducteurs dans ledit tissu. Dans une exécution préférée du dispositif, lesdites première et deuxième couche textile comprennent un revêtement métallique dans la région desdites zones actives. Les techniques de dépôt d'un tel revêtement métallique sont bien maîtrisés et les tissus peuvent être produits à faibles coûts. Les couches appliquées sont très minces et la flexibilité du tissu est entièrement préservé. De plus, les techniques de métallisation permettent de bien délimiter les régions électroconductrices des régions isolantes.

Dans une version préférée de l'invention, la première couche textile et la deuxième couche textile comprennent chacune un revêtement métallique en forme de bandes adjacentes, les couches textiles étant orientés de manière à ce que lesdits revêtements en forme de bande se croisent au niveau des zones actives dudit dispositif. De cette manière on réalise une disposition "en matrice", dans laquelle les bandes de la première couche textile constituent les colonnes et les bandes de la deuxième couche constituent les lignes. Ainsi chaque zone active et donc chaque touche du clavier est formé entre une bande "colonne" de la première couche textile et une bande "ligne" de la deuxième couche textile. Une telle disposition limite avantageusement le nombre des connexions nécessaires pour l'adressage des différentes zones actives. En effet, chaque zone active peut être surveillée en mesurant la résistance entre les deux bandes respectives formant la touche.

Il est à noter qu'une telle disposition facilite également la connexion du dispositif, car les bandes métallisées s'apprêtent bien à un sertissage crimp.

Dans une version alternative, la première couche textile comprend un revêtement métallique continu et la deuxième couche textile comprend un revêtement métallique en forme de sections isolées localisées à l'endroit des zones actives. Dans une telle exécution, la couche métallique de la première couche textile constitue l'électrode commune pour chacune des zones active du dispositif. Les sections isolées de la deuxième couche textile doivent être contactées individuellement dans cette exécution. Les conducteurs servant à contacter les revêtements métalliques sont de préférence déposées sur la couche textile respective.

Il sera apprécié, que dans les deux exécutions, le dispositif comprend des zones actives discrètes, dont la résistance peut être déterminé individuellement.

Contrairement aux claviers du genre tablette digitalisante (X-Y-pad), un tel clavier permet une affectation multiple des touches moyennant une touche "Shift".

L'écarteur du dispositif comprend selon l'utilisation un tissu ou non-tissé compressible ou non-compressible. Il sera apprécié que dans une version alternative, l'écarteur comprend un matériau granulé isolant appliqué sur l'une des couches textiles. Dans ce cas, la grosseur de grains du matériau granulé sera choisi de manière à être supérieure à l'épaisseur de la couche en matériau à résistance variable resp. à la grosseur de grains des granulés en matériau à résistance variable.

L'assemblage du dispositif peut se faire selon plusieurs techniques connues. Les couches textiles sont p.ex. laminés ou bien cousus sur ledit écarteur.

### Description à l'aide des figures

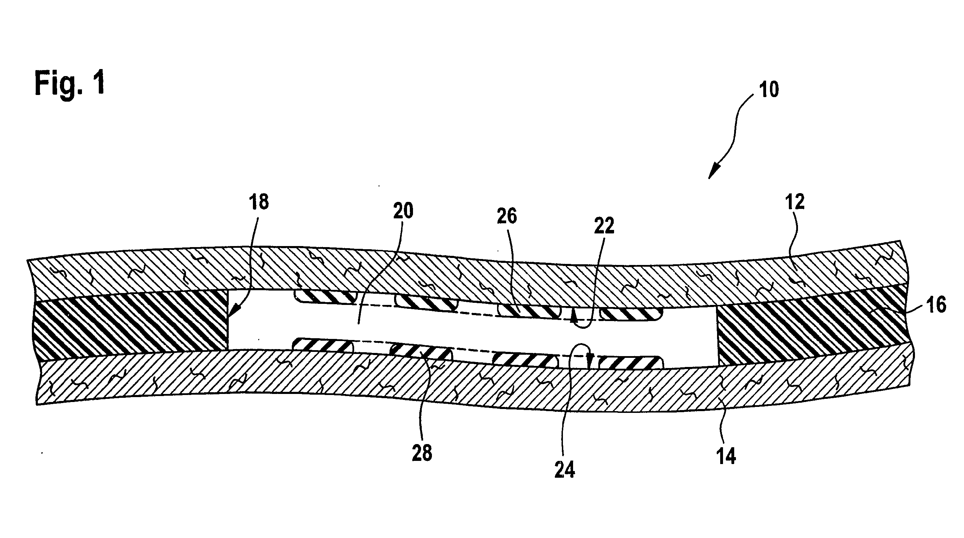

D'autres particularités et caractéristiques de l'invention ressortiront de la description détaillée d'un mode de réalisation avantageux présenté ci-dessous, à titre d'illustration, en référence à la figure 1 annexée. Cette figure 1 montre une coupe à travers une zone active d'un clavier flexible.

Le clavier 10 est formé par une première couche textile 12 et une deuxième couche textile 14, qui sont arrangés à une certaine distance l'une de l'autre à l'aide d'un écarteur 16. L'écarteur, qui peut être formé en non-tissé, comporte des ouvertures 18, qui délimitent une zone active 20 du clavier. A l'intérieur de la zone active 20, chacune des couches textiles 12 et 14 est revêtue d'une mince couche en métal 22 resp. 24. Les métallisations 22 et 24 des couches textiles 12 et 14 forment les électrodes de la "touche" défini par la zone active 20.

Afin d'éviter les contacts accidentels des deux électrodes par une flexion du clavier, un matériau à résistance variable avec la pression 26 et 28 est appliqué sur les deux métallisations 22 resp. 24. Le matériau est appliqué, par exemple dans un procédé de sérigraphie, sous forme de points espacés, l'espacement entre les points étant assez petit pour éviter le contact direct des deux métallisations. Ainsi la flexibilité des couches textiles est avantageusement préservée.

Alternativement, le matériau à résistance variable peut être appliqué sous forme d'une couche continue. Une telle exécution est montré en pointillé dans la figure 1.

## Revendications

1. Dispositif d'entrée de données flexible (10), comprenant une première couche textile (12) et une deuxième couche textile (14), lesdites première et deuxième couches textiles (12, 14) étant arrangées à une distance l'une au dessus de l'autre à l'aide d'un écarteur (16), ledit écarteur (16) comprenant des ouvertures (18) délimitant des zones actives (20) dudit dispositif d'entrée de données (10), dans lequel lesdites première et deuxième couches textiles (12, 14) sont électroconductrices dans lesdites zones actives (20) et **caractérisé en ce qu'**un matériau à résistance variable avec la pression (26, 28) est appliqué, dans les zones actives (20), sur au moins une des couches textiles (12, 14).

2. Dispositif (10) selon la revendication 1, dans lequel un matériau à résistance variable avec la pression (26, 28) est appliqué, dans les zones actives (20), sur chacune des couches textiles (12, 14).

3. Dispositif (10) selon l'une des revendications 1 à 2, dans lequel le matériau à résistance variable avec la pression (26, 28) est appliqué sous forme de couche continue sur ladite couche textile (12, 14).

4. Dispositif (10) selon l'une des revendications 1 à 2, dans lequel le matériau à résistance variable avec la pression (26, 28) est appliqué sous forme de points espacés sur ladite couche textile (12, 14).

5. Dispositif (10) selon l'une des revendications 1 à 2, dans lequel le matériau à résistance variable avec la pression (26, 28) est appliqué sous forme de granulés microscopiques.

6. Dispositif (10) selon l'une des revendications 1 à 5, dans lequel lesdites première et deuxième couche textile (12, 14) comprennent un revêtement métallique (22, 24) dans la région desdites zones actives (20).

7. Dispositif (10) selon l'une des revendications 1 à 6, dans lequel la première couche textile (12) et la deuxième couche textile (14) comprennent chacune un revêtement métallique (22, 24) en forme de bandes adjacentes, les couches textiles (12, 14) étant orientés de manière à ce que lesdits revêtements en forme de bande se croisent au niveau des zones actives (20) dudit dispositif (10).

8. Dispositif (10) selon l'une des revendications 1 à 6, dans lequel la première couche textile (12) comprend un revêtement métallique (22) continu et la deuxième couche textile comprend un revêtement métallique (24) en forme de sections isolées localisées à l'endroit des zones actives (20).

9. Dispositif (10) selon l'une des revendications 1 à 8, dans lequel l'écarteur (16) comprend un tissu ou un non-tissé compressible.

10. Dispositif (10) selon l'une des revendications 1 à 8, dans lequel l'écarteur (16) comprend un tissu ou un non-tissé non-compressible

11. Dispositif (10) selon l'une des revendications 1 à 8, dans lequel l'écarteur (16) comprend un matériau granulé appliqué sur une des couches textiles (12, 14).

12. Dispositif (10) selon l'une des revendications 1 à 10, dans lequel les couches textiles (12, 14) sont laminées sur ledit écarteur (16)

13. Dispositif (10) selon l'une des revendications 1 à 10, dans lequel les couches textiles (12, 14) sont cousues sur ledit écarteur (16),

14. Dispositif (10) selon l'une des revendications précédentes, dans lequel des conducteurs servant à contacter les revêtements métalliques (22,24) sont déposées sur la couche textile (12, 14) respective.

## Claims

1. A flexible data input device (10), comprising a first textile layer (12) and a second textile layer (14), said first and second textile layers (12, 14) being arranged a certain distance above each other by means of a spacer (16), said spacer (16) having openings (18) that define active areas (20) of said data input device (10), wherein, said first and second textile layers (12, 14) are electrically conductive in said active areas (20) and a material exhibiting pressure-variable resistance (26, 28) is applied, in the active areas (20), on at least one of the textile layers (12, 14)

2. The device (10) as claimed in claim 1, wherein a material exhibiting pressure-variable resistance (26, 28) is applied to each of the textile layers (20) in the active areas (12, 14)

3. The device (10) as claimed in either of claims 1 and 2, wherein the material exhibiting pressure-variable resistance (26, 28) is applied in the form of a continuous layer on said textile layer (12, 14)

4. The device (10) as claimed in either of claims 1 and 2, wherein the material exhibiting pressure-variable resistance (26, 28) is applied in the form of spaced-apart spots on said textile layer (12, 14)

5. The device (10) as claimed in either of claims 1 and 2, wherein the material exhibiting pressure-variable resistance (26, 28) is applied in the form of microscopic granules

6. The device (10) as claimed in one of claims 1 to 5, wherein said first and second textile layers (12, 14) include a metal coating (22, 24) in the region of said active areas (20)

7. The device (10) as claimed in one of claims 1 to 6, wherein the first textile layer (12) and the second textile layer (14) each have a metal coating (22, 24) in the form of adjacent bands, the textile layers (12, 14) being oriented so that said coatings in the form of bands intercept in the active areas (20) of said device (10)

8. The device (10) as claimed in one of claims 1 to 6, wherein the first textile layer (12) has a continuous metal coating (22) and the second textile layer has a metal coating (24) in the form of isolated sections localized at the points where the active areas are (20).

9. The device (10) as claimed in one of claims 1 to 8, wherein the spacer (16) comprises a compressible woven or nonwoven.

10. The device (10) as claimed in one of claims 1 to 8, wherein the spacer (16) comprises a noncompressible woven or nonwoven

11. The device (10) as claimed in one of claims 1 to 8, wherein the spacer (16) comprises a granulated material applied to one of the textile layers (12, 14)

12. The device (10) as claimed in one of claims 1 to 10, wherein the textile layers (12, 14) are laminated to said spacer (16).

13. The device (10) as claimed in one of claims 1 to 10, wherein the textile layers (12, 14) are stitched to said spacer (16)

14. The device (10) as claimed in one of the preceding claims, wherein conducting layers serving for contacting the metal coatings (22, 24) are deposited on the respective textile layer (12, 14).

## Patentansprüche

1. Flexibles Dateneingabegerät (10), das eine erste Textilschicht (12) und eine zweite Textilschicht (14) umfasst, wobei die erste und die zweite Textilschicht (12, 14) mit Hilfe eines Abstandshalters (16) in einem Abstand übereinander angeordnet sind, wobei der Abstandshalter (16) Öffnungen (18) umfasst, die die aktiven Zonen (20) des Dateneingabegerätes (10) begrenzen, wobei die erste und die zweite Textilschicht (12, 14) in den aktiven Zonen (20) elektrisch leitend sind, **dadurch gekennzeichnet, dass** ein Material mit druckveränderlichem Widerstand (26, 28), in den aktiven Zonen (20), auf mindestens eine der Textilschichten (12, 14) aufgebracht ist

2. Gerät (10) nach Anspruch 1, bei dem ein Material mit druckveränderlichem Widerstand (26, 28), in den aktiven Zonen (20), auf jede der Textilschichten (12, 14) aufgebracht ist

3. Gerät (10) nach einem der Ansprüche 1 bis 2, bei dem das Material mit druckveränderlichem Widerstand (26, 28) in Form einer durchgehenden Schicht auf die Textilschicht (12, 14) aufgebracht ist

4. Gerät (10) nach einem der Ansprüche 1 bis 2, bei dem das Material mit druckveränderlichem Widerstand (26, 28) in Form von beabstandeten Punkten auf die Textilschicht (12, 14) aufgebracht ist.

5. Gerät (10) nach einem der Ansprüche 1 bis 2, bei dem das Material mit druckveränderlichem Widerstand (26, 28) in Form von mikroskopischem Granulat aufgebracht ist

6. Gerät (10) nach einem der Ansprüche 1 bis 5, bei dem die erste und die zweite Textilschicht (12, 14) einen metallischen Überzug (22, 24) im Bereich der aktiven Zonen (20) umfassen

7. Gerät (10) nach einem der Ansprüche 1 bis 6, bei dem die erste Textilschicht (12) und die zweite Textilschicht (14) jeweils einen metallischen Überzug (22, 24) in Form von benachbarten Streifen umfassen, wobei die Textilschichten (12, 14) so ausgerichtet sind, dass die Überzüge in Streifenform sich im Bereich der aktiven Zonen (20) des Gerätes (10) kreuzen.

8. Gerät (10) nach einem der Ansprüche 1 bis 6, bei dem die erste Textilschicht (12) einen durchgehenden metallischen Überzug (22) umfasst und die zweite Textilschicht einen metallischen Überzug (24) in Form von einzelnen Abschnitten umfasst, die am Ort der aktiven Zonen (20) angeordnet sind.

9. Gerät (10) nach einem der Ansprüche 1 bis 8, bei dem der Abstandshalter (16) ein Gewebe oder einen zusammendrückbaren Vliesstoff umfasst.

10. Gerät (10) nach einem der Ansprüche 1 bis 8, bei dem der Abstandshalter (16) ein Gewebe oder einen nicht zusammendrückbaren Vliesstoff umfasst.

11. Gerät (10) nach einem der Ansprüche 1 bis 8, bei dem der Abstandshalter (16) ein Granulatmaterial umfasst, das auf eine der Textilschichten (12, 14) aufgebracht ist.

12. Gerät (10) nach einem der Ansprüche 1 bis 10, bei dem die Textilschichten (12, 14) auf den Abstandshalter (16) laminiert sind

13. Gerät (10) nach einem der Ansprüche 1 bis 10, bei dem die Textilschichten (12, 14) auf den Abstandshalter (16) genäht sind

14. Gerät (10) nach einem der vorangehenden Ansprüche, bei dem die Leiterbahnen, die zum Kontaktieren der metallischen Überzüge (22, 24) dienen, auf die jeweilige Textilschicht (12, 14) abgeschieden sind
